Europäisches Patentamt

European Patent Office

Office européen des brevets

(11) Veröffentlichungsnummer: **0 370 353**
A2

(12) **EUROPÄISCHE PATENTANMELDUNG**

(21) Anmeldenummer: 89120984.3

(22) Anmeldetag: 11.11.89

(51) Int. Cl.⁵: **B32B 21/06, B32B 31/18**

(30) Priorität: 19.11.88 DE 3839164
02.03.89 DE 3906594

(43) Veröffentlichungstag der Anmeldung:
30.05.90 Patentblatt 90/22

(84) Benannte Vertragsstaaten:
AT BE CH ES FR GB IT LI

(71) Anmelder: Gruber & Weber
Obertsroter Strasse 9
D-7562 Gernsbach-Obertsrot(DE)

(72) Erfinder: Wedemeyer Von Hans-Werner
Schannweg 131
D-7562 Gernbach(DE)

(74) Vertreter: Jackisch-Kohl, Anna-Katharina et al
Patentanwälte Jackisch-Kohl & Kohl
Stuttgarter Strasse 115
D-7000 Stuttgart 30(DE)

(54) Verfahren zur Herstellung eines Postforming-Laminats.

(57) Um ein Postforming-Laminat (2.0) arbeits- und materialsparend herstellen und den Schichtstoff (1.1) einfach mit dem Werkstück verbinden zu können, wird das Postforming-Laminat in einem Arbeitsgang beim Aufkaschieren der Schicht auf einen Trägerwerkstoff (1.3) hergestellt und durch nachträgliches Abfräsen und/oder Abschleifen von Teilen des Trägermaterials zum nachfolgenden Postformen freigegeben. Das Postforming-Laminat wird dadurch beim Verpressen der Schicht auf den Trägerwerkstoff (1.3) in einem Arbeitsgang hergestellt, so daß nur ein Teil des Trägermaterials zum nachfolgenden Postformen freigelegt werden muß. Mit diesem Verfahren ist es möglich, auf kostengünstige Weise ein ausreichend festes und elastisches Postforming-Laminat herzustellen, das ausschließlich aus kunstharzgetränkten Papierbahnen besteht.

FIG. 21

## Verfahren zur Herstellung eines Postforming-Laminats

Die Erfindung betrifft ein Verfahren zur Herstellung eines Postforming-Laminats nach dem Oberbegriff des Anspruches 1.

Die Postforming-Technik hat bei der Herstellung von Möbel-und Inneneinrichtungsteilen der Möbelindustrie eine hohe Bedeutung erlangt. Für das Postforming-Laminat werden mindestens zwei, meist jedoch drei bis sechs kunstharzgetränkte Papierbahnen miteinander verbunden, von denen üblicherweise die die Außenschicht bildende Papierbahn durch ein dekoratives Papier gebildet ist, während die darunter befindlichen Papierbahnen zur Erhöhung der Festigkeit und Elastizität dienen. Bei Flächen mit einer hohen Oberflächenabriebbeanspruchung ist es üblich, zusätzlich als Schutzschicht ein sogenanntes kunstharzgetränktes durchscheinendes Overlaypapier mit zu verpressen.

Die marktüblichen Postforming-Laminate haben eine Dicke von 0,5 bis 1,2 mm, je nach Herstellverfahren und Anforderung. Sie werden im Takt- oder im Durchlaufverfahren in Nieder-Druckpressen bei etwa 10 bis 35 kp/cm oder in Takt-Hoch-Druckpressen bei etwa 40 bis 60 kp/cm hergestellt.

Diese Postforming-Laminate werden an vorbearbeiteten Werkstücken angebracht. Als Werkstücke werden beispielsweise Spanplatten oder Platten aus anderen Werkstoffen verwendet, deren Oberflächen geschliffen und deren Kanten entsprechend der gewünschten Kantenausformung abgefräst werden. Auf diese vorgefertigten Werkstücke werden dann die ebenfalls vorgefertigten Postforming-Laminate mit einem entsprechenden Überstand aufgeleimt. In einer Postformingstraße wird sodann das überstehende Laminat unter Druck und Hitze sowie mit einem entsprechenden Klebstoff um das vorgefräste Werkstück an der Kante herumgezogen und unter Druck und Wärme zum Abbinden gebracht. Der Zweck dieses Arbeitsganges ist es, formschöne Elemente herzustellen, deren Kanten unterschiedlich gerundet sein können. Dabei kann das Element oder das Werkstück an seinen Flächen und Kanten mit dem gleichen dekorativen Schichtstoff versehen sein.

Nachteilig bei dieser bekannten Technik ist jedoch, daß es zur Herstellung der Postforming-Elemente stets notwendig ist, verhältnismäßig aufwendige Postforming-Schichtstoffe herzustellen und in mehreren arbeits-, energie- und materialaufwendigen Vorgängen zu fertigen und diese vorgefertigten Schichtstoffe in einem weiteren Arbeitsgang auf dem Träger bzw. dem Werkstück aufzubringen.

Der Erfindung liegt die Aufgabe zugrunde, das gattungsgemäße Verfahren so auszubilden, daß das Laminat in nur wenigen arbeits-, energieund materialsparenden Vorgängen gefertigt werden kann, wobei der Träger in sehr einfacher Weise mit dem Schichtstoff versehen werden kann.

Diese Aufgabe wird beim gattungsgemäßen Verfahren erfindungsgemäß mit den kennzeichnenden Merkmalen des Anspruches 1 gelöst.

Bei der erfindungsgemäßen Ausbildung wird das Postforminglaminat nicht in einem gesonderten Arbeitsgang hergestellt und anschließend als Schichtstoffplatte auf den Trägerwerkstoff aufgebracht, sondern das Postforminglaminat wird beim Verpressen bzw. Aufkaschieren der Schicht auf den Trägerwerkstoff in einem Arbeitsgang hergestellt. Danach muß nur noch ein Teil des Trägermaterials zum nachfolgenden Postformen freigelegt werden. Somit entfallen arbeits-, energie- und materialaufwendige und damit kostenintensive Arbeitsgänge. Auf diese Weise läßt sich das erfindungsgemäße Postforming-Laminat in nur wenigen Arbeitsgängen äußerst kostengünstig herstellen.

Bei einer bevorzugten Ausbildung wird die Trägerschicht bzw. der Unterteil nach dem Aufkaschieren der beharzten Papierbahn etwa auf Laminatstärke abgetragen. Vorteilhaft wird als Trägerschicht eine aus Holzwerkstoffen bestehende Platte verwendet, die nach dem Aufkaschieren der Papierbahn etwa auf Laminatstärke abgetragen wird, vorzugsweise so weit, daß diese Trägerschicht nur einige zehntel Millimeter dick ist, vorzugsweise etwa 0,06 bis etwa 0, 6 mm. Dadurch wird ein ausreichend festes und elastisches Postforming-Laminat erhalten, das wesentlich kostengünstiger ist als das bekannte Postforming-Laminat, das ausschließlich aus kunstharzgetränkten Papierbahnen besteht. Auf diese Weise läßt sich das erfindungsgemäße Postforming-Laminat in nur wenigen Arbeitsgängen äußerst kostengünstig herstellen. Insbesondere wird es möglich, wesentlich engere Kantenradien (bis hinunter zu 1-2 mm Rundungsradius) mit dem, sehr dünnen, Postforminglaminat herzustellen, als dies bisher möglich war. Mit normalen gesondert hergestellten und nachträglich aufgeleimten Postforminglaminaten können bislang nur Radien bis hinunter zu etwa 4 - 6 mm, vorzugsweise 10 mm, hergestellt werden. Hierdurch werden ganz neue Designmöglichkeiten bei der Möbelherstellung eröffnet.

Bei einer bevorzugten Ausbildung gemäß Anspruch 5 ist das Postforming-Laminat einstückig mit dem entsprechenden Werkstück bzw. Element ausgebildet. So kann als Element eine mit dem Postforminglaminat direkt kaschierte Holzwerkstoffplatte verwendet werden, von der nur so viel abgefräst, abgesägt, abgehobelt und/oder abgeschliffen werden muß, als für den nachträglichen Postforming-Vorgang erforderlich ist. Der eine Randbereich wird hierbei so weit abgetragen, daß das Postforming-Laminat gebildet wird, das infolge dieser Verfahrensweise einstückig mit dem Element ausgebildet ist.

Vorteilhaft wird dann anstelle des entfernten Mittelstückes eine Einlage eingesetzt, um die das Postforming-Laminat gelegt wird. Anschließend läßt sich dieses Laminat mit Anpreßwalzen, Federn, Andruckleisten oder dgl. um die Einlage legen und fest an sie andrücken. Das Laminat ist mit entsprechendem Klebemittel versehen, so daß eine innige Verbindung zwischen dem Laminat und der Einlage entsteht. Es ist somit ein großer wirtschaflicher Vorteil des erfindungsgemäßen Postforming-Laminates, daß bei gleicher Postforming-Qualität das Laminat originär und direkt mit dem bereits fertig direktbeschichteten, kostengünstigen Werkstoff verbunden sein kann. Das erfindungsgemäße Postforming-Laminat muß in diesem Falle nicht nachträglich auf das Element aufgeklebt werden. Auf diese Weise lassen sich besonders formschöne Werkstücke bzw. Elemente mit jeder gewünschten Kantenausbildung herstellen.

Weitere Merkmale der Erfindung ergeben sich aus den weiteren <Ansprüchen, der Beschreibung und den Zeichnungen.

Die Erfindung wird anhand einiger in den Zeichnungen dargestellter Ausführungsbeispiele näher erläutert.

Es zeigen

Fig. 1 bis 3 verschiedene Ausführungsbeispiele von bekannten Postforming-Laminaten,

Fig. 4 bis 11 verschiedene Verfahrensschritte bei der Herstellung eines erfindungsgemäßen Postforming-Laminates an einem Träger,

Fig. 12 bis 14 verschiedene Ausführungsbeispiele, bei denen das Postforming-Laminat Teil einer Platte ist,

Fig. 15 und 16 jeweils weitere Ausführungsbeispiele von Postforming-Laminaten, die einen Kern ganz bzw. teilweise umgeben,

Fig. 17 und 18 ein weiteres Ausführungsbeispiel eines Postforming-Laminates, das Teil einer Platte ist,

Fig. 19 bis 24 in Darstellungen entsprechend den Fig. 6 bis 11 verschiedene Verfahrensschritte bei der Herstellung einer bevorzugten, hauptsächlich angewandten Ausführungsform eines erfindungsgemäßen Postforming-Laminates an einem Träger.

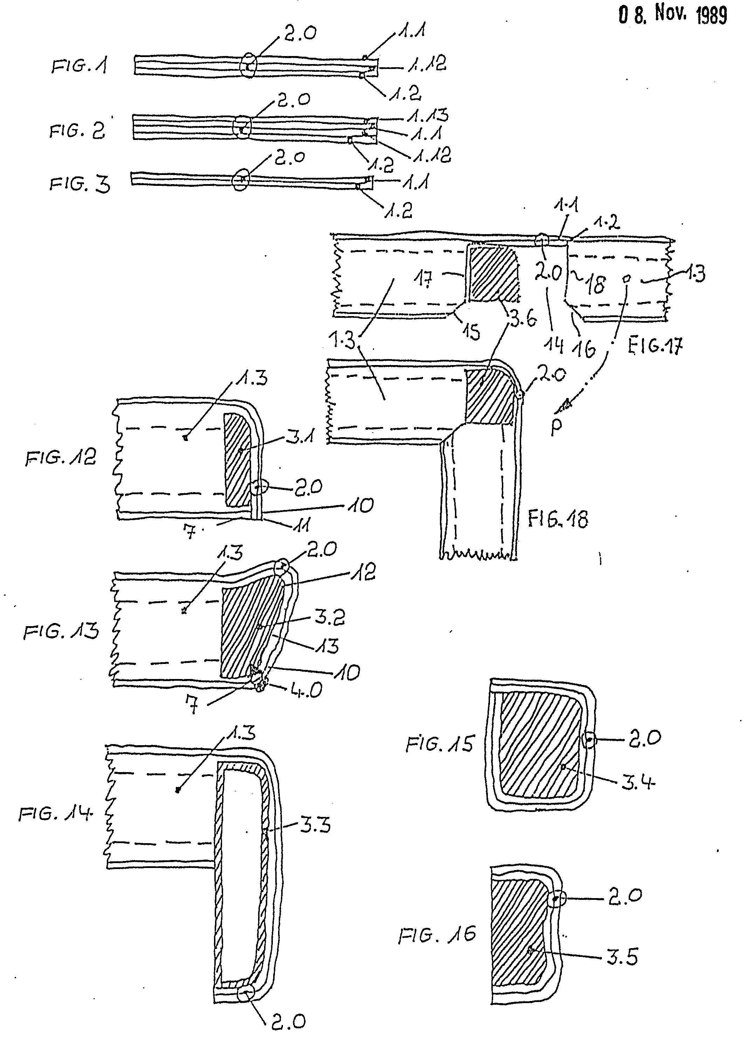

Mit den bekannten Postforming-Laminaten (Fig. 1 bis 3), die eine Dicke von etwa 0,5 bis 1,2 mm haben, werden unterschiedlichste Träger beschichtet. Vorzugsweise werden diese Postforming-Laminate bei der Herstellung von Möbeln und Inneneinrichtungsteilen im Baubereich verwendet.

Das in Fig. 1 dargestellte Postforming-Laminat besteht aus zwei kunstharzgetränkten Papierbahnen 1.1 und 1.1.2, die vollständig oder weitgehend ausgehärtet sind. Die äußere Papierbahn 1.1 dient zu dekorativen Zwecken und kann demgemäß auch Muster und dgl. aufweisen, während die untere oder innere Papierbahn 1.1.2 die Festigkeit und Elastizität des Laminats erhöht. Das Postforming-Laminat weist schließlich als dritte Schicht 1.2 kunstharzverleimte Holzspäne oder Holzfasern auf. Auch diese Schicht ist extrem dünn, so daß das gesamte Postforming-Laminat die beschriebene Dicke aufweist.

Die Ausführungsform nach Fig. 2 unterscheidet sich vom Ausführungsbeispiel nach Fig. 1 nur dadurch, daß auf die äußere Papierbahn 1.1 eine verschleißverbessernde Overlaybahn 1.13 aufgebracht ist, die vorzugsweise harzimprägniert ist.

Fig. 3 zeigt eine sehr einfache Ausführungsform eines Postforming-Laminates. Es hat nur eine einzige kunstharzgetränkte Papierbahn 1.1, die vollständig oder weitgehend ausgehärtet ist. Diese Papierbahn 1.1 ist so ausgebildet, daß sie den dekorativen und/oder Festigkeits- und Elastizitätsanforderungen genügt. Die Papierbahn 1.1 ist wiederum auf die Schicht 1.2 aufgebracht, die durch kunstharzverleimte Holzspäne oder Holzfasern gebildet wird.

Bei den beschriebenen Ausführungsbeispielen nach den Fig. 1 bis 3 wird die Außenseite durch eine Papierbahn 1.1 gebildet, auf der gegebenenfalls die Overlayschicht 1.13 aufgebracht sein kann, während die Unterseite durch die Schicht 1.2 gebildet ist, die aus kunstharzverleimten Holzspänen oder Holzfasern besteht. Die Overlayschicht 1.13 kann auch beim Ausführungsbeispiel nach Fig. 3 vorgesehen sein. Ebenso ist es möglich, anstelle der einen oder der zwei aufeinanderliegenden Papierbahnen noch weitere Papierbahnen vorzusehen.

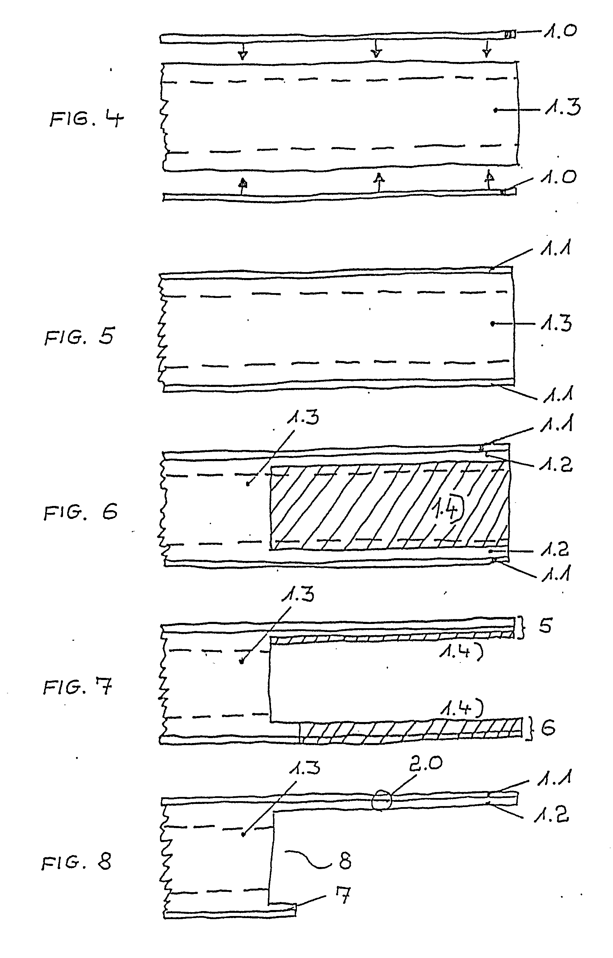

Bei den erfindungsgemäßen Ausführungsbeispielen nach den Fig. 4 bis 16 ist der Einfachheit halber jeweils nur eine einzige äußere Papierbahn 1.1 dargestellt. Selbstverständlich können bei diesen Ausführungsbeispielen weitere Papierbahnen und gegebenfalls auch noch eine Overlayschicht vorgesehen sein.

Anhand der Fig. 4 bis 11 soll an einem Ausführungsbeispiel die Herstellung eines Postforming-Laminates erläutert werden. Auf die Ober- und Unterseite eines Trägers 1.3, der vorzugsweise eine Holzwerkstoffplatte ist, wird jeweils eine kunstharzgetränkte, vorkondensierte Papierbahn 1.0 ohne Überstand aufgebracht. Auf diese Weise wird ein beidseitig beschichteter Träger 1.3 erhalten, der vorzugsweise eine direkt kaschierte Holzwerkstoffplatte ist.

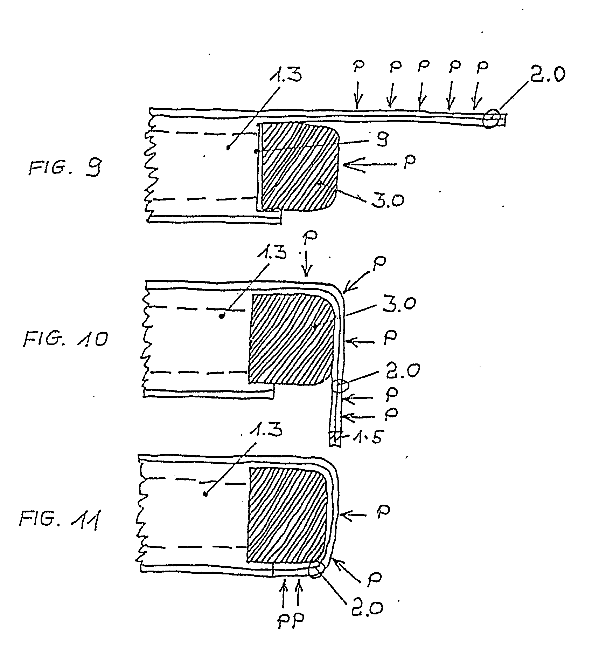

Das Tränkharz der Papierbahn 1.0 wird in seiner Eigenschaft so eingestellt, daß nach dem folgenden Heißverpressen (Fig. 5) noch genügend Elastizität für den sogenannten Postforming-Vorgang vorhanden ist. Dieser Heißverpreßvorgang, bei dem die Papierbahn 1.0 mit· dem Träger 1.3 fest verbunden wird, wird hinsichtlich Temperatur-, Druck- und Zeitverlauf so gesteuert, daß nach diesem Preßvorgang das herzustellende Laminat eine ausreichende Elastizität hat. Ebenso wird die Leimverbindung des Trägers 1.3 in sich selbst, d.h. zwischen dem Kunstharz und den Holzspänen bzw. Holzfasern so eingestellt, daß das Laminat nach dem Heißverpressen ausreichend elastisch ist.

Der kaschierte Träger 1.3 wird nach Aufbringen der Papierbahnen 1.0 heißverpreßt, so daß die kunstharzgetränkten, vollständig oder weitgehend ausgehärteten Papierbahnen 1.1 gebildet werden (Fig. 5).

Nach dem Heißpreßvorgang wird der kaschierte Träger 1.3 im Kantenbereich so bearbeitet, daß das Postforming-Laminat gebildet wird. In denjenigen Kantenbereichen, in denen ein solches Laminat nicht vorgesehen sein soll, bleibt der kaschierte Träger 1.3 unbearbeitet. Somit entsteht nach dem Postforming-Vorgang ein Werkstück mit einer Postformingkante und einer ununterbrochenen Oberfläche mit gleichartigem Dekor und gleichartiger Struktur auf dem Werkstück und auf der Postforming-Kante. Wie Fig. 6 zeigt, wird in demjenigen Kantenbereich, in dem das Postforming-Laminat benötigt wird, aus dem Träger 1.3 ein entsprechendes Teil 1.4 durch Abfräsen, Absägen, Abhobeln und/oder Abschleifen entfernt. Es verbleiben dann, wie Fig. 7 zeigt, zwei Randstreifen 5 und 6, die allerdings zur Herstellung des Postforming-Laminates noch zu dick sind. Darum werden in einem anschließenden Arbeitsgang die gestrichelten Bereiche 1.4 entfernt. Am Randstreifen 5 wird hierbei der restliche Teil des Trägers 1.3 so weit abgetragen, daß nur noch die Unterseite 1.2 des Laminates 2.0 übrig bleibt. Der untere Randstreifen 6 wird bis auf ein kurzes Stück 7 vollständig entfernt. Wie Fig. 8 zeigt, ist der Träger 1.3 somit am Randbereich an einer Seite mit dem Laminat 2.0 versehen, das nunmehr (Fig. 9 bis 11) umgebogen wird.

Um den Postforming-Vorgang günstig durchführen zu können, wird eine Postforming-Matrize bzw. -Einlage 3.0 in den freigearbeiteten Hohlraum 8 eingesetzt. Das Reststück 7 bildet hierbei eine Lagesicherung für die Einlage 3.0. Als Material für die Einlage 3.0 eignet sich eine vorgefertigte feinbearbeitete Holzleiste oder Holzfaserleiste, vorzugsweise eine MDF-Leiste, eine Vollkunststoffleiste oder ein Profilstück, vorzugsweise ein metallisches Hohlprofilstück. Ein solches Profilstück ist u.a. günstig zur gleichzeitigen Verringerung der Durchbiegung bei einer horizontal eingebauten Platte.

Nach dem Einsetzen der Einlage 3.0 in den Hohlraum 8 wird das Postforming-Laminat 2.0 durch Erwärmung und entsprechende Druckbeaufschlagung P um die Einlage herumgelegt (Fig. 10 und 11). Je nach der Länge des Laminates 2.0 muß gegebenenfalls das freie Ende 1.5 dieses Laminates entfernt werden, damit das Laminat, wenn es vollständig um die Einlage 3.0 herumgelegt ist, bündig an das Stück 7 anschließt (Fig. 11).

Das Endstück 7 dient zur Sicherung der Einlage 3.0, die vorteilhaft auf dem Rand 9 im Bereich zwischen den beiden Randstreifen 5 und 6 verleimt wird. Das um die Einlage 3.0 herumgelegte Laminat 2.0 wird mit der Einlage 3.0 vorzugsweise verleimt. Um eine innige Verbindung zwischen dem Laminat 2.0 und der Einlage 3.0 zu erhalten, wird das Laminat fest gegen die Einlage 3.0 gedrückt (Pfeile P). Das Herumlegen des Laminates 2.0 erfolgt vorzugsweise unter Wärmeeinwirkung, so daß sich das Laminat sauber und genau an die Einlage 3.0 anlegen läßt.

Die Postforming-Matrize bzw. -Einlage 3.0 ist vorzugsweise eine fein verarbeitete Leiste, so daß der mit dem Laminat 2.0 versehene Randbereich des Trägers 1.3 sauber verarbeitet ist.

Der Druck P während des Postforming-Verfahrens (Fig. 9 bis 11) kann mit Anpreßwalzen, Federn oder Andruckleisten auf das Laminat 2.0 aufgebracht werden.

Der große wirtschaftliche Vorteil des beschriebenen Verfahrens besteht darin, daß das Laminat 2.0 Bestandteil des bereits fertig beschichteten Trägers 1.3 ist, so daß das Laminat nicht erst nachträglich am Träger 1.3 befestigt werden muß. Ist der Träger 1.3 eine Holzwerkstoffplatte, kann auf diese Weise bei hoher Postforming-Qualität sehr wirtschaftlich eine solche mit einem Laminat versehene Platte hergestellt werden.

Die Einlage, über welche das Laminat 2.0 gelegt wird, kann unterschiedliche Formen haben, so daß der entsprechende Randbereich des Trägers 1.3 unterschiedlich geformt sein kann. Die Fig. 12 bis 14 zeigen hierzu beispielhaft weitere Möglichkeiten.

Beim Ausführungsbeispiel nach Fig. 12 ist die Einlage 3.1 wesentlich dünner als die Einlage 3.0 nach den Fig. 9 bis 11. Das Reststück 7 des Trägers 1.3 ist so lang, daß es mit seiner Stirnseite in Höhe der Auflageseite der Einlage 3.1 für das Laminat 2.0 liegt. Es wird dann so um die Einlage 3.1 in der beschriebenen Weise herumgelegt, daß das freie Ende 10 des Laminates 2.0 auf der Stirnseite des Endstückes 7 befestigt wird. Bei dieser Ausführungsform weist der Träger 1.3 in seinem Randbereich an der Unterseite die Kante 11 auf. Beim vorigen Ausführungsbeispiel ist der Übergang vom seitlichen Rand zur Unterseite des Trägers 1.3 abgerundet.

Beim Ausführungsbeispiel nach Fig. 13 ist die Einlage 3.2 an ihrer Randseite mit einer Erhöhung 12 und einer schräg nach innen verlaufenden Außenseite 13 versehen. Die Oberseite und die Außenseite 13 der Einlage 3.2 wird in der beschriebenen Weise durch das Laminat 2.0 abgedeckt. Zwischen dem freien Ende 10 des Laminates 2.0 und dem Endstück 7 des Trägers 1.3 ist zur Abdichtung ein Keder 4.0 eingesetzt.

Bei der Ausführungsform nach Fig. 14 wird als Einlage 3.3 ein Hohlprofilstück verwendet. Im Gegensatz zu den vorigen Ausführungsbeispielen überragt die Einlage 3.3 die Unterseite des Trägers 1.3. Das Laminat 2.0 wird in der beschriebenen Weise teilweise um die Einlage 3.3 herumgelegt. Das Laminat 2.0 deckt auf diese Weise die Oberseite, die Außenseite und die Unterseite der Einlage 3.3 ab. Der nach unten über den Träger 1.3 ragende Teil der Innenseite der Einlage 3.3 ist durch das Laminat nicht abgedeckt. Selbstverständlich ist es möglich, daß Laminat 2.0 so lang auszubilden, daß es auch die überstehende Innenseite der Einlage 3.3 abdecken kann.

Bei den Ausführungsbeispielen nach den Fig. 4 bis 14 ist das Laminat 2.0 jeweils Bestandteil des Trägers 1.3.

Die Fig. 15 und 16 zeigen Ausführungsbeispiele, bei denen das Laminat 2.0 nicht mehr Bestandteil des Trägers ist, sondern auf die Einlage unmittelbar aufgebracht wird.

Diese Laminate 2.0 werden durch Direktkaschieren sogenannter Dünnspanplatten hergestellt, die beispielsweise eine Stärke von nur 3 mm haben. Diese Dünnspanplatten werden nach dem Aufbringen der Papierbahn(en) so weit abgetragen, vorzugsweise abgeschliffen, daß das dadurch gebildete Laminat gleich dick ist wie bei den zuvor beschriebenen Ausführungsbeispielen. Das Laminat läßt sich dann mühelos nachträglich z.B. zur Ummantelung von Leisten verwenden, wie dies beispielhaft in den Fig. 15 und 16 dargestellt ist.

Fig. 15 zeigt eine Einlage 3.4, die allseitig vom Laminat 2.0 umgeben ist. Beim Ausführungsbeispiel nach Fig. 16 wird die Einlage 3.5 nur an drei Seiten vom Laminat 2.0 bedeckt. Die Formgebung der Einlagen 3.4 und 3.5 kann im übrigen beliebig gestaltet werden. Aufgrund seiner geringen Dicke läßt sich das Laminat 2.0 mühelos an die unterschiedlichsten Umrißformen der Einlagen anpassen.

Die Fig. 17 und 18 zeigen die Möglichkeit, zwei im Winkel, vorzugsweise rechtwinklig zueinander liegende Träger 1.3 aus einem Stück zu fertigen und den Übergang zwischen den beiden winklig zueinander liegenden Platten mit dem Postforming-Laminat 2.0 zu versehen. Zunächst wird aus dem Träger 1.3 an der vorgesehenen Stelle ein Mittelstück in der beschriebenen Weise entfernt und die verbleibende Schicht 1.2 bis auf etwa Laminatstärke in der beschriebenen Weise abgetragen. Auf diese Weise wird das Postforming-Laminat 2.0 mit der Papierbahn 1.1 und der Unterseite 1.2 gebildet, welche die beiden Plattenteile 1.3 miteinander verbindet. In den verbleibenden Zwischenraum 14 zwischen den beiden Plattenteilen 1.3 wird die Einlage 3.6 eingesetzt und beispielsweise am Rand des einen Trägerteiles 1.3 verleimt. Anschließend wird der andere Trägerteil 1.3 in Pfeilrichtung P um die Einlage 3.6 herumgelegt, so daß das Postforming-Laminat 2.0 an die Außenseite der Einlage 3.2 angelegt wird (Fig. 18). Die beiden Träger 1.3 liegen mit Gehrungskanten 15 und 16 unmittelbar aneinander. Das Postforming-Laminat 2.0 wird in der beschriebenen Weise durch Druckbeaufschlagung fest gegen die Einlage 3.6 gedrückt und dadurch beispielsweise fest mit der Einlage verleimt. Der Zwischenraum 14 ist so ausgebildet, daß die beiden Träger 1.3 mit ihren den Zwischenraum 14 begrenzenden Rändern 17 und 18 an den entsprechenden Außenseiten der Einlage 3.6 anliegenden (Fig. 18). Auf diese Weise lassen sich sehr einfach auch Postforming-Laminate am Übergangsbereich von winklig zueinander liegenden Trägern herstellen. Die Einlage 3.6 kann wiederum die unterschiedlichsten Umrißformen haben, insbesondere im Bereich des Postforming-Laminates 2.0, so daß der Übergangsbereich zwischen den beiden Trägern in jeder gewünschten Weise geformt werden kann. Der Träger 1.3 kann leisten- oder auch plattenförmig ausgebildet sein. Bei dieser Ausführungsform wird somit in einem vorzugsweise mittleren Bereich des Trägers 1.3 ein Streifen entfernt, vorzugsweise ausgefräst, feingeschliffen u.s.w. In zwei weiteren Arbeitsgängen wird dann die Einlage 3.6 zum Beispiel aus einem MDF-Faserplattenstreifen eingeklebt und das Laminat 2.0 in einer Postforming-Anlage so herumgezogen, daß sich die beschriebene Eckverbindung in Verbindung mit dem Postforming-Laminat 2.0 herstellen läßt.

Das Postforming-Laminat 2.0 wird durch Heißverpressen der mit vorkondensiertem Kunstharz getränkten Papierbahnen mit einem Holzwerkstoff, vorzugsweise einer Holzspan- oder Holzfaserplatte, insbesondere einer MDF-Platte, hergestellt. Dieser Holzwerkstoff wird, wie dies anhand der zuvor beschriebenen Ausführungsbeispiele erläutert worden ist, nach dem Heißverpressen von der Rückseite bzw. Innenseite her so weit abgearbeitet, wie abgefräst, abgehobelt, abgesägt und/oder abgeschliffen, daß nur noch die extrem dünne Holz-bzw. Holzspan- bzw. Holzfaserschicht an der durch das Heißverpressen weitgehend auskondensierten kunstharzimprägnierten Papierbahn übrig bleibt. Anstelle der kunstharzgetränkten Papierbahn können auch Kunststoffolien, Verbundfolien aus Kunststoff und Textil und dgl. verwendet werden.

Für die untere Lage des Postforming-Laminates können anstelle der kunstharzgebundenen Holzwerkstoffe auch andere Werkstoffe, wie Gipsholzspanplatten, Gipsfaserplatten, Holzfurnierplatten, Vollkunststoffplatten und Verbundplatten aus diesen Materialien verwendet werden.

Die Herstellung der Postforming-Laminate 2.0 sowie des Trägers 1.3 zur Bearbeitung zum Postforming-Laminat kann beispielsweise in Taktpressen oder in kontinuierlichen Durchlaufpressen erfolgen.

Wie die verschiedenen Ausführungsbeispiele zeigen, können die Träger 1.3 die unterschiedlichsten Formen aufweisen, so daß für den jeweiligen Verwendungszweck des Trägers eine optimale Formgestaltung vorgenommen werden kann.

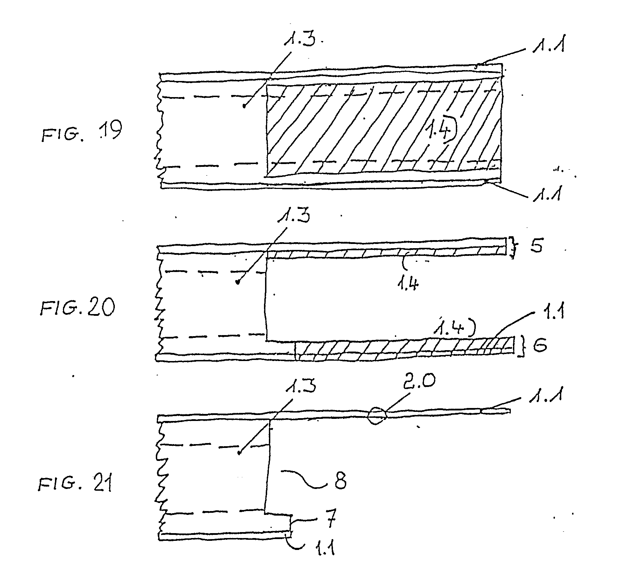

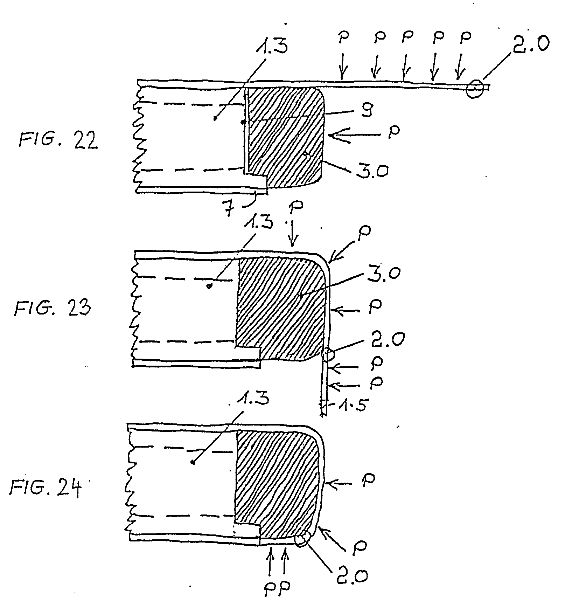

Beim bevorzugten Ausführungsbeispiel nach den Fig. 19 bis 24 wird das Postforming-Laminat 2.0 durch die Papierbahn 1.1 allein gebildet. Die Papierbahn 1.1 wird entsprechend dem Ausführungsbeispiel nach den Fig. 6 bis 11 beim Kaschieren auf den Träger 1.3 in einem Arbeitsgang hergestellt. Wiederum ist an der Ober- und Unterseite des Trägers 1.3 jeweils eine Papierbahn 1.1 vorgesehen. Anstelle der einzigen Papierbahn 1.1 an der Ober- und Unterseite des Trägers 1.3 können auch zwei oder mehr Papierbahnen vorgesehen sein. Die Papierbahnen 1.1 werden ebenfalls ohne Überstand auf den Träger 1.3 aufgebracht. In demjenigen Kantenbereich, in dem das Postforming-Laminat benötigt wird, wird aus dem Träger 1.3 ein entsprechendes Teil 1.4 durch Abfräsen, Absägen, Abhobeln und/oder Abschleifen so entfernt, daß an der Oberseite nur noch der Randstreifen 5 mit der Papierbahn 1.1 und einem Teil 1.4 des Trägers 1.3 und an der Unterseite der untere Randstreifen 6 mit der Papierbahn 1.1 und einem Teil 1.4 des Trägers übrigbleibt (Fig. 20). Der Trägerteil 1.4 des Randstreifens 5 wird dann so weit entfernt, daß an der Oberseite des Trägers 1.3 nur noch die Papierbahn 1.1 vorhanden ist. Der untere Randstreifen 6 wird wiederum bis auf ein kurzes Stück 7 vollständig entfernt. Wie Fig. 21 zeigt, ist somit der Träger 1.3 am Randbereich an der Oberseite mit dem Laminat 2.0 versehen, das anschließend entsprechend der in den Fig. 22 bis 24 dargestellten Weise umgebogen wird. In den freigearbeiteten Hohlraum 8 wird eine Postforming-Matrize bzw. -Einlage 3.0 eingesetzt. Das durch einen Teil der unteren Papierbahn 1.1 und durch den Trägerteil 1.4 gebildete Reststück 7 bildet eine Lagesicherung für die Einlage 3.0. Nach dem Einsetzen in den Hohlraum 8 wird das Postforming-Laminat 2.0 durch Erwärmung und entsprechende Druckbeaufschlagung P um die Einlage herumgelegt (Fig. 22 bis 24). Je nach Länge des Laminates 2.0 muß gegebenenfalls das freie Ende 1.5 des Laminates entfernt werden, damit es, wenn es vollständig um die Einlage 3.0 herumgelegt ist, bündig an das Reststück 7 anschließt (Fig. 24). Im übrigen entspricht dieses Ausführungsbeispiel vollständig der Ausführungsform nach den Fig. 4 bis 11.

Bei den beschriebenen Verfahren wird nicht eine fertige Schichtstoffplatte auf eine Platte aufgeklebt, sondern es werden beharzte Bögen bzw. Papierbahnen direkt auf die Platte 1.3 kaschiert. Das Postforminglaminat wird demnach nicht gesondert hergestellt, sondern beim Verpressen-Aufkaschieren auf die Platte 1.3 in einem Arbeitsgang hergestellt, die anschließend zur Bildung des Postforming-Laminates an den entsprechenden Kantenbereichen abgearbeitet wird.

## Ansprüche

1. Verfahren zur Herstellung eines Postforming-Laminates, das eine Schicht, insbesondere zumindest eine, vorzugsweise zwei beharzte Papierbahnen aufweist,
dadurch gekennzeichnet, daß das Postforminglaminat (2.0) in einem Arbeitsgang beim Aufkaschieren der Schicht (1.1,1.2) auf einen Trägerwerkstoff (1.3), vorzugsweise eine Spanplatte, hergestellt und durch nachträgliches Abfräsen und/oder Abschleifen von Teilen des Trägermaterials zum nachfolgenden Postformen freigelegt wird.

2. Verfahren nach Anspruch 1,
dadurch gekennzeichnet, daß als Postforminglaminat (2.0) mindestens eine kunstharzgetränkte und während des Aufkaschierens weitgehend ausgehärtete Papierbahn (1.1, 1.12) verwendet wird.

3. Verfahren nach Anspruch 1 oder 2,
dadurch gekennzeichnet, daß das Postforminglaminat (2.0) auf einer Trägerschicht (1.2) aufgebracht ist, die nach dem Aufkaschieren der beharzten Papierbahn (1.1, 1.12) auf etwa Laminatstärke abgetragen wird.

4. Verfahren nach einem der Ansprüche 1 bis 3,
dadurch gekennzeichnet, daß das Postforminglaminat (2.0) mit dem Träger (1.3) bzw. der Trägerschicht (1.2) heiß verpreßt wird.

5. Verfahren nach einem der Ansprüche 1 bis 4,
dadurch gekennzeichnet, daß der Träger (1.3) zumindest an einer Seite, vorzugsweise an beiden Seiten mit mindestens einer Beschichtung (1.1) versehen wird, daß anschließend im Kantenbereich des Trägers (1.3) ein Mittelstück (1.4) entfernt wird, und daß der eine verbleibende Randbereich (5) zur Bildung der Trägerschicht (1.2) bzw. des Postforming-Laminates (2.0) abgetragen wird.

6. Verfahren nach Anspruch 5,
dadurch gekennzeichnet, daß anstelle des entfernten Mittelstückes (1.4) eine Einlage (3.0) eingesetzt wird, um die das Postforming-Laminat (2.0) anschließend gelegt und mit ihr verbunden wird.

7. Verfahren nach Anspruch 6, dadurch gekennzeichnet, daß als Einlage (3.0) eine Holzleiste, eine Holzfaserleiste, eine Vollkunststoffleiste, ein Hohlprofilstück und dgl. verwendet wird.

8. Verfahren nach einem der Ansprüche 1 bis 7, dadurch gekennzeichnet, daß in einem vorzugsweise mittig liegenden Bereich aus dem Träger (1.3) unter Bildung eines Postforming-Laminates (2.0) ein Stück entfernt wird, daß in dem dadurch erhaltenen Zwischenraum (14) eine Einlage (3.6) angeordnet wird, und daß anschließend die durch den Zwischenraum (14) voneinander getrennten und lediglich durch das Postforming-Laminat (2.0) zusammengehaltenen Trägerteile (1.3) so relativ gegeneinander bewegt werden, daß das Postforming-Laminat (2.0) an die Außenseite der Einlage (3.6) angelegt wird.

0 8. Nov. 1989

FIG. 1

FIG. 2

FIG. 3

FIG. 12

FIG. 13

FIG. 14

FIG. 15

FIG. 16

FIG. 17

FIG. 18

P 1951.2 EP

0 8. Nov. 1989

FIG. 4

1.0

1.3

1.0

FIG. 5

1.1

1.3

1.1

FIG. 6

1.3

1.1

1.2

1.4

1.2

1.1

FIG. 7

1.3

1.4)

} 5

1.4)

} 6

FIG. 8

1.3

2.0

1.1

1.2

8

7

P 1951.2 EP

0 8. Nov. 1989

FIG. 9

FIG. 10

FIG. 11

P 1951.2 EP

0 8. Nov. 1989

FIG. 19

1.3.

1.1

1.4

1.1

FIG. 20

1.3

} 5

1.4

1.4)

1.1

} 6

FIG. 21

1.3

2.0

1.1

8

7

1.1

FIG. 22

FIG. 23

FIG. 24